# EUROPÄISCHE PATENTSCHRIFT

(11) **EP 3 610 227 B1**
(45) Veröffentlichungstag und Bekanntmachung des Hinweises auf die Patenterteilung: **07.08.2024**
(21) Anmeldenummer: 18715589.0
(22) Anmeldetag: 27.03.2018
(51) Int. Cl.: G01F 1/34, G01F 5/00, G01L 19/00, G01L 19/06

(54) **SENSORELEMENT ZUR ERFASSUNG MINDESTENS EINER EIGENSCHAFT EINES FLUIDEN MEDIUMS**
SENSOR ELEMENT FOR DETECTING AT LEAST ONE PROPERTY OF A FLUID MEDIUM
ÉLÉMENT DE DÉTECTION PERMETTANT DE DÉTECTER AU MOINS UNE PROPRIÉTÉ D'UN MILIEU FLUIDE

(30) Priorität: 11.04.2017 DE 102017206234
(43) Veröffentlichungstag der Anmeldung: 19.02.2020
(73) Patentinhaber: Robert Bosch GmbH, 70442 Stuttgart (DE)
(72) Erfinder: PLOGMANN, Benjamin, 73061 Rosswaelden (DE)
(86) Internationale Anmeldenummer: PCT/EP2018/057780
(87) Internationale Veröffentlichungsnummer: WO 2018/188943

(56) Entgegenhaltungen:
- DE-A1- 102010 043 062
- DE-A1- 102010 043 062
- US-A- 4 989 456
- US-A- 4 989 456
- US-A1- 2007 131 279
- US-A1- 2007 131 279

## Beschreibung

### Stand der Technik

Aus dem Stand der Technik sind verschiedene Arten von Sensorelementen zur Erfassung mindestens einer Eigenschaft eines fluiden Mediums bekannt. Ohne Beschränkung weiterer möglicher Einschränkungen wird die Erfindung im Folgenden unter Bezugnahme auf druckbasierte Luftmassenmesser beschrieben. Auch andere Ausgestaltungen sind jedoch grundsätzlich möglich.

So ist es allgemein beispielsweise bekannt, die Luftmasse in Luftsystemen wie beispielsweise im Ansaugtrakt einer Brennkraftmaschine durch verschiedene Messprinzipien zu bestimmen. Neben thermischen Messprinzipien, beispielsweise in Form von Heißfilmluftmassenmessern (HFM), sind auch druckbasierte Luftmassenmessungen bekannt, welche auf mindestens einer Druckmessung basieren. Beispielsweise sind hierbei die so genannten Prandtl-Sonden oder Venturi-Rohre zu nennen. Beispielsweise kann zur Bestimmung einer Luftmasse, welche pro Zeiteinheit durch eine Röhre strömt, ein Differenzdruck aus zwei statischen Drücken oder einem statischen Druck und einem Absolutdruck gemessen werden. Die Genauigkeit der Luftmassenmessung lässt sich bei diesen Verfahren beispielsweise durch Bestimmung der Dichte mittels zusätzlicher Druck- und/oder Temperaturmessungen verbessern.

US 2007/131279 A1 offenbart ein MEMS-Strömungssensor mit einem Strömungstrenner, der den Flüssigkeitsstrom in zwei Abschnitte trennt.

Beispielsweise zeigt DE 10 2014 212 854 A1 einen Durchflussmesser zur Messung eines Durchflusses eines mit einer Hauptströmungsrichtung durch ein Strömungsrohr strömenden fluiden Mediums. Der Durchflussmesser umfasst ein einen Strömungsquerschnitt des Strömungsrohrs teilweise verengendes Störelement, einen ersten Druckmesspunkt, der bezüglich der Hauptströmungsrichtung stromaufwärts des Störelements angeordnet ist, und einen zweiten Druckmesspunkt, der bezüglich der Hauptströmungsrichtung stromabwärts des Störelements angeordnet ist. Das Störelement ist zum veränderbaren Verengen des Strömungsquerschnitts des Strömungsrohrs ausgebildet.

DE 10 2007 053 273 A1 beschreibt einen Durchflussmesser zur Messung eines Durchflusses eines mit einer Hauptströmungsrichtung durch ein Strömungsrohr strömenden fluiden Mediums. Der Durchflussmesser weist ein Steckerteil mit einer Anströmseite und einer Abströmseite auf. In dem Steckerteil ist auf der Anströmseite eine anströmseitig durch eine Öffnung zugängliche Staukammer ausgebildet. In einer Seitenwand der Staukammer ist eine erste Druckmessstelle aufgenommen. In einer Außenwand des Steckerteils ist eine zweite Druckmessstelle aufgenommen.

Trotz der mittels der bekannten Messvorrichtungen erzielten Vorteile verbleiben nach wie vor eine Vielzahl an technischen Herausforderungen bei der Messung von Strömungseigenschaften fluider Medien. Insbesondere im Ansaugtrakt von Brennkraftmaschinen besteht eine Herausforderung beispielsweise darin, die verwendeten Sensoren vor Wasser und Schmutzpartikeln zu schützen und somit eine Fehlanzeige der Drucksensoren und damit verbunden eine Fehlanzeige der Luftmasse zu vermeiden.

### Offenbarung der Erfindung

Die vorliegende Erfindung wurde in dem unabhängigen Anspruch 1 definiert. Vorteilhafte Weiterbildungen der vorliegenden Erfindung wurden in den abhängigen Ansprüchen 2-10 definiert.

Es wird dementsprechend ein Sensorelement zur Erfassung mindestens einer Eigenschaft eines fluiden Mediums vorgeschlagen. Das Sensorelement kann, wie nachfolgend noch näher beschrieben wird, beispielsweise einen Luftmassenmesser, einen Durchflussmesser, einen Strömungsmesser, einen Absolutdruckmesser oder einen Differenzdruckmesser bilden. Beispielsweise kann die Erfindung in einer oder mehreren der oben genannten Durchflussmesser eingesetzt werden. Auch andere Ausgestaltungen sind jedoch grundsätzlich möglich.

Das fluide Medium kann grundsätzlich ein beliebiges Gas oder eine beliebige Flüssigkeit sein. Insbesondere kann das fluide Medium eine Ansaugluftmasse einer Brennkraftmaschine sein oder auch ein Abgas einer Brennkraftmaschine. Dementsprechend ist das Sensorelement insbesondere im Bereich der Automobiltechnik einsetzbar. Auch andere Einsatzgebiete sind jedoch grundsätzlich möglich.

Die mindestens eine Eigenschaft des fluiden Mediums kann insbesondere eine Strömungseigenschaft sein, beispielsweise eine Geschwindigkeit, ein Volumenstrom, ein Massenstrom, ein Druck, ein Druckdifferenz oder eine andere physikalisch messbare Eigenschaft. Auch andere Eigenschaften sind jedoch grundsätzlich möglich.

Das Sensorelement umfasst mindestens ein Gehäuse. Das Sensorelement kann insbesondere ganz oder teilweise als Steckfühler ausgebildet sein. So kann das Gehäuse beispielsweise einen Steckfühler bilden oder einen Steckfühler umfassen, welcher in ein Strömungsrohr des fluiden Mediums, beispielsweise in einem Ansaugtrakt einer Brennkraftmaschine, eingesteckt werden kann oder in dieses Strömungsrohr hineinragen kann. Auch andere Ausgestaltungen sind jedoch grundsätzlich möglich.

Das Gehäuse umfasst mindestens eine für das fluide Medium zugängliche Einlauföffnung. Unter einer Einlauföffnung ist allgemein eine Öffnung in dem Gehäuse zu verstehen, in welcher das fluide Medium einströmen oder eindringen kann. Die Öffnung kann insbesondere eine Mündung in dem Gehäuse sowie einen sich von der Mündung aus in das Gehäuse hinein erstreckenden Kanal oder Kanalabschnitt umfassen, insbesondere ein Sackloch. Ist das Sensorelement als Steckfühler ausgestaltet, so kann diese Einlauföffnung insbesondere derart in dem Strömungsrohr, in welches der Steckfühler eingesteckt wird, orientiert sein, dass diese der Strömung des fluiden Mediums entgegenweist. Dementsprechend kann die Einlauföffnung insbesondere auf einer Vorderseite des Steckfühlers angeordnet sein, welche einer Strömungsrichtung des fluiden Mediums entgegengesetzt gerichtet ist, so dass diese Vorderseite von dem fluiden Medium angeströmt wird. Das Gehäuse kann insbesondere ganz oder teilweise aus mindestens einem Material hergestellt sein, ausgewählt aus der Gruppe bestehend aus Kunststoff, Metall, Keramik.

In der Einlauföffnung ist mindestens ein Drucksensor zur Erfassung eines Drucks des fluiden Mediums angeordnet. Wie nachfolgend noch näher beschrieben wird, kann sich am Ende der Einlauföffnung, welche beispielsweise als Sackloch ausgestaltet sein kann, mindestens ein Druckabgriff befinden, in welchem der Drucksensor angeordnet ist. Bei dem Drucksensor kann es sich insbesondere um mindestens ein mikromechanisches Drucksensorelement handeln, beispielsweise einen Halbleitersensor. Derartige Sensoren basieren üblicherweise darauf, dass durch einen Absolutdruck oder einen Differenzdruck eine Membran des Drucksensorelements verformt wird, wobei die Verformung der Membran beispielsweise mittels Piezo-Sensoren und/oder mittels Widerständen gemessen werden kann.

In der Einlauföffnung vor dem Drucksensor ragt eine Mehrzahl von Rippen aus mindestens einer Wand der Einlauföffnung in die Einlauföffnung hinein. So kann die Einlauföffnung beispielsweise zwei einander gegenüberliegende Wände aufweisen, aus denen abwechselnd in einer Richtung entlang der Einlauföffnung Rippen in die Einlauföffnung hineinragen. Beispielsweise kann die Einlauföffnung einen im Wesentlichen rechteckigen Querschnitt aufweisen, wobei Längsseiten des rechteckigen Querschnitts beispielsweise parallel zu einer Längserstreckungsachse des Steckfühlers orientiert sein können. Die Rippen können dementsprechend beispielsweise abwechselnd entlang der Einlauföffnung aus den einander gegenüberliegenden Wänden in die Einlauföffnung hineinragen. Alternativ oder zusätzlich zu einem abwechselnden Muster sind jedoch auch andere alternierende Anordnungen der Rippen möglich. So kann beispielsweise auch ein Muster realisiert werden, bei welchem zunächst eine Rippe auf einer ersten Wand angeordnet ist, anschließend wieder eine Rippe auf dieser ersten Wand, anschließend eine Rippe auf einer geneüberliegenden, zweiten Wand. Vorzugsweise ist mindestens eine Rippe auf der ersten Wand und mindestens eine Rippe auf der gegenüberliegenden, zweiten Wand angeordnet.

Unter einer Rippe ist dabei allgemein ein länglicher Vorsprung zu verstehen. Die Rippen können beispielsweise selbst einen rechteckigen Querschnitt aufweisen. Auch eine abgerundete Gestalt ist jedoch grundsätzlich möglich.

Die Rippen können, wie oben ausgeführt, insbesondere derart ausgestaltet sein, dass mindestens eine der Rippen auf einer ersten Wand der Einlauföffnung angeordnet ist und mindestens eine weitere der Rippen auf einer der ersten Wand gegenüberliegenden zweiten Wand der Einlauföffnung angeordnet ist. Die Rippen können insbesondere in einer Schnittebene durch die Einlauföffnung, beispielsweise in einer Schnittebene parallel zu einer Achse der Einlauföffnung und senkrecht zu einer durch eine Längserstreckungsachse des Steckfühlers und eine Strömungsrichtung verlaufende Schnittebene, fingerförmig von einander gegenüberliegenden Wänden der Einlauföffnung ineinander ragen. Die Rippen können also beispielsweise interdigital zueinander angeordnet sein, mit einem Überlapp oder auch ohne Überlapp. Es können insbesondere mehrere Rippen versetzt zueinander in Strömungsrichtung angeordnet sein, insbesondere in einer Strömungsrichtung entlang der Einlauföffnung, beispielsweise parallel zu einer Achse der Einlauföffnung, so dass eine Strömung des fluiden Mediums hin zu dem Drucksensor durch die Einlauföffnung mehrfach durch die Rippen umgelenkt wird.

Die Einlauföffnung kann insbesondere einen Querschnitt aufweisen, wobei die Rippen in einer Draufsicht auf die Einlauföffnung, insbesondere in einer Blickrichtung parallel zu einer Achse der Einlauföffnung, 20-80 % des Querschnitts der Einlauföffnung verdecken, insbesondere 40-60 % des Querschnitts der Einlauföffnung.

Wie oben ausgeführt, kann das Sensorelement insbesondere ausgewählt sein aus der Gruppe bestehend aus: einem Luftmassenmesser, einem Durchflussmesser, einem Strömungsmesser, einem Absolutdruckmesser, einem Differenzdruckmesser. Das Sensorelement kann insbesondere, zusätzlich zu dem in der Einlauföffnung angeordneten Drucksensor, mindestens einen weiteren Drucksensor aufweisen. Insbesondere kann das Sensorelement eingerichtet sein, um den in der Einlauföffnung angeordneten Drucksensor als Absolutdrucksensor zu verwenden und den mindestens einen weiteren Drucksensor als statischen Drucksensor, und wobei das Sensorelement weiterhin eingerichtet ist, um einen Differenzdruck zwischen einem Signal des Absolutdrucksensors und einem Signal des statischen Drucksensors zu bilden.

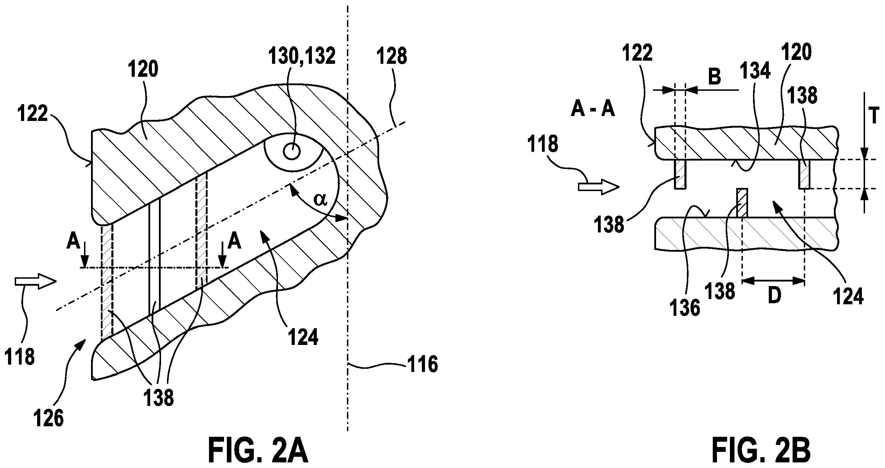

Wie oben ausgeführt, kann insbesondere kann eine Mündung der Einlauföffnung in einer Vorderseite eines Steckfühlers angeordnet sein, welche von dem fluiden Medium angeströmt wird. Die eigentliche Einlauföffnung kann beispielsweise eine Bohrungsachse, beispielsweise eine Bohrungsachse einer Sacklochbohrung, aufweisen, welche dann, ausgehend von der Mündung der Einlauföffnung, insbesondere schräg zu der Strömungsrichtung des fluiden Mediums verlaufen kann. Beispielsweise kann eine Achse der Bohrung der Einlauföffnung einen Winkel mit der Strömungsrichtung einschließen, welcher beispielsweise 10° bis 50° beträgt, beispielsweise 20° bis 45°. Das Sensorelement kann insbesondere eine Achse aufweisen, insbesondere eine Steckfühlerachse, wobei die Bohrungsachse der Einlauföffnung in einem von 90° abweichenden Winkel α zu der Achse angeordnet ist, insbesondere in einem Winkel α von 20° bis 80°, vorzugsweise von 30° bis 70°, wie nachfolgend anhand der Figur 2A noch exemplarisch erläutert wird.

### Vorteile der Erfindung

Das erfindungsgemäße Sensorelement weist gegenüber herkömmlichen Sensorelementen zahlreiche Vorteile auf. Insbesondere lässt sich durch die Gestaltung der Einlauföffnung mit den Rippen der Drucksensor wirksam vor Wasser und Schmutzpartikeln schützen und damit eine Fehlanzeige des Drucksensors und beispielsweise eine Fehlanzeige einer Luftmasse wirksam vermeiden. So kann beispielsweise ein Absolutdruckabgriff derart gestaltet werden, dass Wasser und Schmutzpartikel abgeschieden werden und nur noch trockene und Schmutzpartikel freie Luft an den Drucksensor, insbesondere dem Differenzdrucksensor, ankommt. Ein Vorteil dieser Ausgestaltung besteht darin, dass sich grundsätzlich eine temporäre Fehlanzeige von Drucksensoren durch Wasser und Schmutzablagerung weitgehend vermeiden lässt. Weiterhin lässt sich eine dauerhafte Kennlinienveränderung von Drucksensoren und somit eine fehlerhafte Bestimmung der Luftmasse durch Schmutzablagerungen, insbesondere nach Verdunstung des Wassers, zumindest weitgehend vermeiden.

### Kurze Beschreibung der Zeichnungen

Weitere Einzelheiten und optionale Merkmale der Erfindung sind in den Ausführungsbeispielen dargestellt, welche in den nachfolgenden Zeichnungen schematisch gezeigt sind.

Es zeigen:
- Figur 1: ein Ausführungsbeispiel eines erfindungsgemäßen Sensorelements zur Erfassung mindestens einer Eigenschaft eines fluiden Mediums;
- Figuren 2A und 2B: verschiedene Schnittdarstellungen durch eine Einlauföffnung des Sensorelements gemäß Figur 1; und
- Figur 3: eine schematische Darstellung eines Luftsystems einer Brennkraftmaschine mit einer Anordnung des erfindungsgemäßen Sensorelements zwischen einem Ladeluftkühler und einem Drosselventil.

### Ausführungsformen der Erfindung

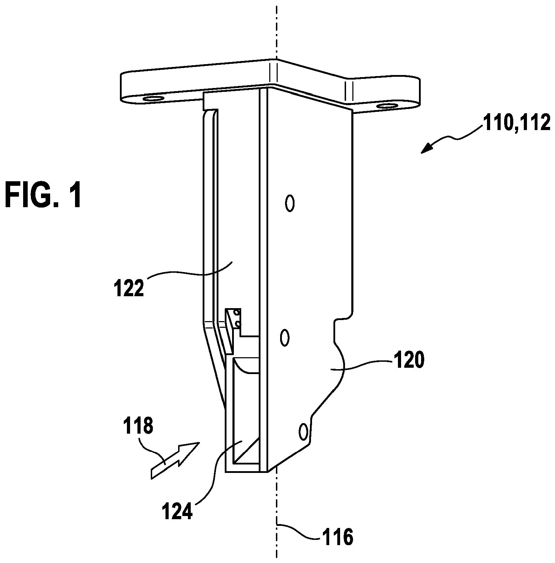

In Figur 1 ist ein Ausführungsbeispiel eines erfindungsgemäßen Sensorelements 110 dargestellt, welches in dem Ausführungsbeispiel insbesondere als druckbasierter Luftmassenmesser 112 (PFM) eingesetzt werden kann. Das Sensorelement 110 ist insbesondere ganz oder teilweise als Steckfühler 114 ausgestaltet und weist eine Steckfühlerachse 116 auf, entlang derer der Steckfühler 114 in ein fluides Medium, beispielsweise in einem Strömungskanal, hineinragt. Das fluide Medium strömt den Steckfühler 114 in einer Strömungsrichtung 118 an.

Das Sensorelement 110 weist ein Gehäuse 120 auf, mit einer Vorderseite 122, welche von dem fluiden Medium angeströmt wird. In der Vorderseite 122 ist eine Einlauföffnung 124 eingelassen, welche beispielsweise, wie in Figur 1 erkennbar, einen rechteckigen Querschnitt aufweisen kann und durch welche das fluide Medium ins Innere des Gehäuses 120 gelangen kann. Diese Einlauföffnung 124 wird auch als Einlaufkontur bezeichnet.

In den Figuren 2A und 2B sind verschiedene Schnittdarstellungen durch das Gehäuse 120 gezeigt. Dabei zeigt Figur 2A eine Schnittdarstellung in einer Schnittebene, welche parallel zu der Steckfühlerachse 116 und parallel zu der Strömungsrichtung 118, beispielsweise zu einer Strömungsrohrachse eines Strömungsrohrs, verläuft. Figur 2B zeigt eine Schnittdarstellung entlang der Schnittlinie A-A in Figur 2A, also eine Schnittdarstellung senkrecht zu der Schnittebene in Figur 2A.

Wie aus diesen Schnittdarstellungen erkennbar ist, ist die Einlauföffnung 124, ausgehend von ihrer Mündung 126, länglich ausgestaltet und verläuft schräg zu der Steckfühlerachse 116, sodass die Steckfühlerachse 116 und eine Achse 128 einen Winkel α ≠ 90° einschließen. An einem der Mündung 126 gegenüberliegenden Ende der Einlauföffnung ist ein Druckabgriff 130 angeordnet, welcher auch als Absolutdruckabgriff bezeichnet oder verwendet werden kann. Dieser Druckabgriff 130 umfasst mindestens einen Drucksensor 132, welcher beispielsweise in einer Sacklochbohrung senkrecht zur Zeichenebene in Figur 2A angeordnet sein kann und welcher beispielsweise dementsprechend von dem fluiden Medium, welches in die Einlauföffnung 124 hineinströmt, erreichbar ist.

Aus den einander gegenüberliegenden Seitenwänden 134, 136 der Einlauföffnung 124 ragen Rippen 138 hervor. Diese Rippen erstrecken sich erfindungsgemäß über die gesamte Höhe der Einlauföffnung 124 in Figur 2A und sind erfindungsgemäß abwechselnd auf den einander gegenüberliegenden Seitenwänden 134, 136 angeordnet, wie insbesondere in Figur 2B erkennbar ist. Die Rippen weisen eine Rippenbreite B auf, einen Rippenabstand D sowie eine Rippentiefe T, um welche die Rippen in die Einlauföffnung hineinragen. Beispielsweise kann die Rippenbreite B = 1 bis 3 mm betragen. Der Rippenabstand kann beispielsweise D = 5 bis 15 mm betragen. Die Rippentiefe T kann beispielsweise so gestaltet werden, dass sie 20% - 80% des Abstandes zwischen den Seitenwänden 134 und 136, d.h. der gesamten Breite der Einlauföffnung 124, beträgt.

Die Rippen 138 dienen dazu, den Drucksensor 132 vor Wasser und Schmutzablagerungen zu schützen. Die Rippen bedecken, jeweils für sich, vorzugsweise 40-60 % des Querschnitts der Einlauföffnung 124. Die Rippen 138 werden versetzt in Strömungsrichtung angeordnet, wodurch die Strömung bis hin zum Druckabgriff 130 mehrfach umgelenkt wird. Wasser und Schmutzpartikel können aufgrund ihrer Trägheit der Umlenkung in der Regel nicht folgen und treffen dementsprechend auf die Rippen 138. Der Druckabgriff 130 und damit der Drucksensor 132 können somit vor Wasser und Schmutzpartikeln geschützt werden.

Zur Optimierung der Wirkung der Rippen 138 kann der Abstand D zwischen benachbarten Rippen 138 verringert werden. Alternativ oder zusätzlich kann die Tiefe T der Rippen vergrößert werden. Wiederum alternativ oder zusätzlich zu einer oder beiden der genannten Maßnahmen kann die Breite B der Rippen vergrößert werden, und/oder es kann eine vergrößerte Anzahl an Rippen 138 angesetzt werden.

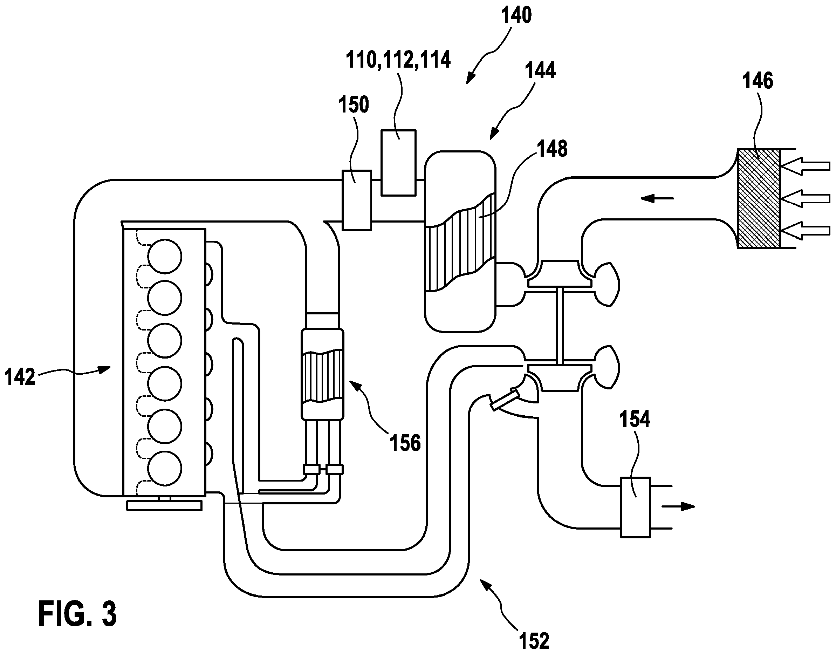

Das Sensorelement 110, beispielsweise der Steckfühler 114 gemäß den Figuren 1, 2A und 2B, kann insbesondere in einem Luftsystem 140 einer Brennkraftmaschine 142 eingesetzt werden, welches schematisch in Figur 3 gezeigt ist. Wie dort erkennbar, umfasst dieses Luftsystem 140 einen Ansaugtrakt 144 mit einem Luftfilter 146, einem Ladeluftkühler 148 und einem Drosselventil 150 sowie einen Abgastrakt 152 mit einer Abgasklappe 154. Weiterhin kann optional eine Abgasrückführung 156 vorgesehen sein. Das Sensorelement 110 kann beispielsweise zwischen dem Ladeluftkühler 148 und dem Drosselventil 150 angeordnet sein und kann beispielsweise als druckbasierter Luftmassenmesser (PFM) 112 ausgestaltet sein.

## Patentansprüche

1. Sensorelement (110) zur Erfassung mindestens einer Eigenschaft eines fluiden Mediums, umfassend mindestens ein Gehäuse (120) mit mindestens einer für das fluiden Medium zugänglichen Einlauföffnung (124), wobei in der Einlauföffnung (124) mindestens ein Drucksensor (132) zur Erfassung eines Drucks des fluiden Mediums angeordnet ist,
wobei
in der Einlauföffnung (124) vor dem Drucksensor (132) eine Mehrzahl von den Drucksensor (132) vor Wasser und Schmutzablagerungen schützenden Rippen (138) aus mindestens einer Wand (134, 136) der Einlauföffnung (124) in die Einlauföffnung (124) hineinragen, wobei die Rippen (138) eine Rippentiefe (T) aufweisen, um welche die Rippen in die Einlauföffnung hineinragen, wobei die Rippen (138) aufgehend von der jeweiligen Wand (134, 136), an welcher die Rippe (138) angeordnet ist, in Richtung der Rippentiefe (T) jeweils eine Rippenachse aufweisen, wobei die Rippen (138) versetzt zueinander in Strömungsrichtung (138) des fluiden Mediums angeordnet sind, **dadurch gekennzeichnet, dass** sich die Rippen (138) über die gesamte Höhe der Einlauföffnung (124) erstrecken, wobei die Rippen (138) abwechselnd auf einander gegenüberliegenden Wänden (134, 136) der Einlauföffnung (124) angeordnet sind, so dass keine Rippenachse einer Rippe (138) kolinear zu einer Rippenachse einer anderen Rippe (138) verläuft, und eine Strömung des fluiden Mediums hin zu dem Drucksensor (132) mehrfach durch die Rippen (138) umgelenkt wird.

2. Sensorelement (110) nach dem vorhergehenden Anspruch, wobei das Sensorelement (110) als Steckfühler (114) ausgebildet ist.

3. Sensorelement (110) nach einem der vorhergehenden Ansprüche, wobei mindestens eine Rippe (138) auf einer ersten Wand (134, 136) der Einlauföffnung (124) angeordnet ist, wobei mindestens eine weitere Rippe (138) auf einer der ersten Wand (134, 138) gegenüberliegenden zweiten Wand (134, 136) der Einlauföffnung (124) angeordnet ist.

4. Sensorelement (110) nach Anspruch 2, wobei die Rippen (138) in einer parallel zu einer Achse der Einlauföffnung (124) und senkrecht zu einer durch eine Längserstreckungsachse des Steckfühlers (114) verlaufenden Schnittebene durch die Einlauföffnung (124) fingerförmig von einander gegenüberliegenden Wänden (134, 136) der Einlauföffnung (124) ineinander ragen.

5. Sensorelement (110) nach einem der vorhergehenden Ansprüche, wobei die Einlauföffnung (124) einen Querschnitt aufweist, wobei die Rippen (138) 20-80% des Querschnitts der Einlauföffnung (124) verdecken.

6. Sensorelement (110) nach einem der vorhergehenden Ansprüche, wobei das Sensorelement (110) ausgewählt ist aus der Gruppe bestehend aus: einem Luftmassenmesser, einem Durchflussmesser, einem Strömungsmesser, einem Absolutdruckmesser, einem Differenzdruckmesser.

7. Sensorelement (110) nach einem der vorhergehenden Ansprüche, wobei das Sensorelement (110), zusätzlich zu dem in der Einlauföffnung (124) angeordneten Drucksensor (132), mindestens einen weiteren Drucksensor aufweist.

8. Sensorelement (110) nach dem vorhergehenden Anspruch, wobei das Sensorelement (110) eingerichtet ist, um den in der Einlauföffnung (124) angeordneten Drucksensor (132) als Absolutdrucksensor zu verwenden und den mindestens einen weiteren Drucksensor (132) als statischen Drucksensor (132), und wobei das Sensorelement (110) weiterhin eingerichtet ist, um einen Differenzdruck zwischen einem Signal des Absolutdrucksensors und einem Signal des statischen Drucksensors (132) zu bilden.

9. Sensorelement (110) nach einem der vorhergehenden Ansprüche, wobei die Einlauföffnung (124) schräg zu einer Strömungsrichtung des fluiden Mediums ausgebildet ist.

10. Sensorelement (110) nach einem der vorhergehenden Ansprüche, wobei das Sensorelement (110) eine Achse aufweist, wobei die Einlauföffnung (124) in einem von 90° abweichenden Winkel zu der Achse angeordnet ist.

## Claims

1. Sensor element (110) for detecting at least one property of a fluid medium, comprising at least one housing (120) having at least one inlet opening (124) accessible to the fluid medium, wherein at least one pressure sensor (132) for detecting a pressure of the fluid medium is arranged in the inlet opening (124),
wherein
in the inlet opening (124) in front of the pressure sensor (132), a plurality of ribs (138) protecting the pressure sensor (132) from water and dirt deposits project from at least one wall (134, 136) of the inlet opening (124) into the inlet opening (124), wherein the ribs (138) have a rib depth (T) by which the ribs project into the inlet opening, wherein the ribs (138) proceeding from the respective wall (134, 136) on which the rib (138) is arranged each have a rib axis in the direction of the rib depth (T), wherein the ribs (138) are arranged offset with respect to one another in the flow direction (138) of the fluid medium, **characterized in that** the ribs (138) extend over the entire height of the inlet opening (124), wherein the ribs (138) are arranged alternately on mutually opposite walls (134, 136) of the inlet opening (124), such that no rib axis of one rib (138) runs collinearly with respect to a rib axis of another rib (138), and a flow of the fluid medium towards the pressure sensor (132) is is diverted a number of times by the ribs (138).

2. Sensor element (110) according to the preceding claim, wherein the sensor element (110) is designed as a plug-in probe (114).

3. Sensor element (110) according to either of the preceding claims, wherein at least one rib (138) is arranged on a first wall (134, 136) of the inlet opening (124), wherein at least one further rib (138) is arranged on a second wall (134, 136) of the inlet opening (124), said second wall being situated opposite the first wall (134, 136).

4. Sensor element (110) according to Claim 2, wherein in a sectional plane through the inlet opening (124) that runs parallel to an axis of the inlet opening (124) and perpendicular to a sectional plane running through a longitudinal extension axis of the plug-in probe (114), the ribs (138) project into one another in finger-shaped fashion from mutually opposite walls (134, 136) of the inlet opening (124).

5. Sensor element (110) according to any of the preceding claims, wherein the inlet opening (124) has a cross-section, wherein the ribs (138) cover 20-80% of the cross-section of the inlet opening (124).

6. Sensor element (110) according to any of the preceding claims, wherein the sensor element (110) is selected from the group consisting of: an air mass meter, a flow rate meter, a flow meter, an absolute pressure meter, a differential pressure meter.

7. Sensor element (110) according to any of the preceding claims, wherein the sensor element (110) has at least one further pressure sensor, in addition to the pressure sensor (132) arranged in the inlet opening (124).

8. Sensor element (110) according to the preceding claim, wherein the sensor element (110) is configured to use the pressure sensor (132) arranged in the inlet opening (124) as an absolute pressure sensor and the at least one further pressure sensor (132) as a static pressure sensor (132), and wherein the sensor element (110) is furthermore configured to form a differential pressure between a signal of the absolute pressure sensor and a signal of the static pressure sensor (132).

9. Sensor element (110) according to any of the preceding claims, wherein the inlet opening (124) is formed obliquely with respect to a flow direction of the fluid medium.

10. Sensor element (110) according to any of the preceding claims, wherein the sensor element (110) has an axis, wherein the inlet opening (124) is arranged at an angle deviating from 90° with respect to the axis.

## Revendications

1. Elément capteur (110) permettant de détecter au moins une propriété d'un milieu fluide, comprenant au moins un boîtier (120) pourvu d'au moins une ouverture d'entrée (124) accessible au milieu fluide, au moins un capteur de pression (132) pour détecter une pression du milieu fluide étant disposé dans l'ouverture d'entrée (124),
dans lequel
dans l'ouverture d'entrée (124) devant le capteur de pression (132), une pluralité de nervures (138) protégeant le capteur de pression (132) contre l'eau et les dépôts de saleté fait saillie dans l'ouverture d'entrée (124) à partir d'au moins une paroi (134, 136) de l'ouverture d'entrée (124), dans lequel les nervures (138) présentent une profondeur de nervure (T) dont les nervures font saillie dans l'ouverture d'entrée, dans lequel les nervures (138) présentent respectivement un axe de nervure en partant de la paroi respective (134, 136) sur laquelle est disposée la nervure (138) en direction de la profondeur de nervure (T), dans lequel les nervures (138) sont disposées de manière décalée les unes par rapport aux autres dans la direction d'écoulement (138) du milieu fluide, **caractérisé en ce que** les nervures (138) s'étendent sur toute la hauteur de l'ouverture d'entrée (124), dans lequel les nervures (138) sont disposées en alternance sur des parois (134, 136) mutuellement opposées de l'ouverture d'entrée (124) de sorte qu'aucun axe de nervure d'une nervure (138) ne s'étend de manière colinéaire à un axe de nervure d'une autre nervure (138), et l'écoulement du milieu fluide jusqu'au capteur de pression (132) est dévié plusieurs fois par les nervures (138).

2. Elément de capteur (110) selon la revendication précédente, dans lequel l'élément capteur (110) est réalisé sous forme de sonde à piquer (114).

3. Elément capteur (110) selon l'une quelconque des revendications précédentes, dans lequel au moins une nervure (138) est disposée sur une première paroi (134, 136) de l'ouverture d'entrée (124), dans lequel au moins une nervure supplémentaire (138) est disposée sur une deuxième paroi (134, 136) de l'ouverture d'entrée (124), opposée à la première paroi (134, 138).

4. Elément capteur (110) selon la revendication 2, dans lequel, dans un plan de coupe s'étendant en parallèle à un axe de l'ouverture d'entrée (124) et perpendiculairement à un axe d'extension longitudinale de la sonde à piquer (114), les nervures (138) s'imbriquent les unes dans les autres à travers l'ouverture d'entrée (124) comme des doigts à partir de parois (134, 136) mutuellement opposées de l'ouverture d'entrée (124).

5. Elément capteur (110) selon l'une quelconque des revendications précédentes, dans lequel l'ouverture d'entrée (124) présente une section transversale, les nervures (138) couvrant de 20 à 80 % de la section transversale de l'ouverture d'entrée (124).

6. Elément capteur (110) selon l'une quelconque des revendications précédentes, dans lequel l'élément capteur (110) est sélectionné dans le groupe composé : d'un débitmètre d'air, d'un débitmètre, d'un fluxmètre, d'un manobaromètre, d'un indicateur de pression différentielle.

7. Elément capteur (110) selon l'une quelconque des revendications précédentes, dans lequel l'élément capteur (110) présente au moins un capteur de pression supplémentaire en plus du capteur de pression (132) disposé dans l'ouverture d'entrée (124).

8. Elément (110) selon la revendication précédente, dans lequel l'élément capteur (110) est conçu pour utiliser le capteur de pression (132) disposé dans l'ouverture d'entrée (124) comme un manobaromètre et pour utiliser ledit au moins un capteur de pression (132) supplémentaire comme un capteur de pression statique (132), et dans lequel l'élément capteur (110) est en outre conçu pour former une pression différentielle entre un signal du manobaromètre et un signal du capteur de pression statique (132).

9. Elément capteur (110) selon l'une quelconque des revendications précédentes, dans lequel l'ouverture d'entrée (124) est réalisée en biais par rapport à une direction d'écoulement du milieu fluide.

10. Elément capteur (110) selon l'une quelconque des revendications précédentes, dans lequel l'élément capteur (110) présente un axe, l'ouverture d'entrée (124) étant disposée selon un angle différent de 90° par rapport à l'axe.
